# EUROPÄISCHE PATENTSCHRIFT

(11) **EP 4 141 288 B1**
(45) Veröffentlichungstag und Bekanntmachung des Hinweises auf die Patenterteilung: **14.08.2024**
(21) Anmeldenummer: 22173927.9
(22) Anmeldetag: 18.05.2022
(51) Int. Cl.: F16H 3/16, F16H 3/091, B60K 17/00, B60K 17/06, B60K 17/02, B60K 17/08, B60K 17/16, F16H 63/34, F16H 61/18, F16H 3/089, F16H 63/36, F16H 63/38, F16H 3/22, F16H 3/08, A01D 69/06, B60K 1/00

(54) **SCHALTGETRIEBEANORDNUNG UND VERFAHREN ZUM BETÄTIGEN EINER SCHALTGETRIEBEANORDNUNG**
TRANSMISSION ARRANGEMENT AND METHOD FOR ACTUATING A TRANSMISSION ARRANGEMENT
ENSEMBLE DE CHANGEMENT DE VITESSES ET PROCÉDÉ PERMETTANT DE FAIRE FONCTIONNER UN ENSEMBLE DE CHANGEMENT DE VITESSES

(30) Priorität: 27.08.2021 DE 102021122269
(43) Veröffentlichungstag der Anmeldung: 01.03.2023
(73) Patentinhaber: CLAAS Industrietechnik GmbH, 33106 Paderborn (DE)
(72) Erfinder: Knoop, Patrick, 33154 Salzkotten (DE); Bleischwitz, Stephan, 33178 Borchen (DE); Schlichting, Dirk, 33014 Bad Driburg (DE)
(74) Vertreter: CLAAS Gruppe

(56) Entgegenhaltungen:
- WO-A1-2016/000891
- GB-A- 783 332
- US-A- 3 364 793

## Beschreibung

Die vorliegende Erfindung betrifft eine Schaltgetriebeanordnung mit einer Antriebswelle und einer Zwischenwelle, auf der ein Schieberad über eine Schaltstange axial verschiebbar ist, um zwischen unterschiedlichen Gängen zu schalten, und ein Verfahren zum Betätigen einer Schaltgetriebeanordnung.

In der DE 10 2016 124 920 A1 ist eine Schaltgetriebeanordnung mit einem Schieberad offenbart, um mit einer unterschiedlichen Übersetzung ein Drehmoment von einer Antriebswelle über die Zwischenwelle auf ein Differenzial zu übertragen. Hierfür ist ein mit einer Innenverzahnung ausgebildetes Schieberad vorgesehen, das in axiale Richtung zwischen zwei lose drehenden Schaltzahnrädern bewegbar ist. Gerade in einer mittleren Position des Schieberades kann es unter Belastung vorkommen, dass das Schieberad aus dem Zahneingriff herauswandert und der Gang vollständig auslegt. Das Schieberad ist durch eine Rasteinrichtung gehalten, die einerseits leichtgängig schaltbar sein soll und andererseits den eingestellten Gang halten muss, um ein Herauswandern des Schieberades aus dem Zahneingriff zu vermeiden.

Aus der US 3 364 793 A ist ferner eine weitere Schaltgetriebeanordnung mit einem Schieberad bekannt, um mit einer unterschiedlichen Übersetzung ein Drehmoment von einer Antriebswelle über die Zwischenwelle auf ein Differenzial zu übertragen. Das Schieberad ist über eine Schaltstange axial verschiebbar, um zwischen unterschiedlichen Gängen zu schalten, wobei die Schaltstange in einem der Gänge mittels einer federbelasteten Kugel positionierbar ist.

Weiterhin ist aus der WO 2016/000891 A1 ein Getriebe mit einer Schaltaktorik bekannt, deren Schaltgabeln, die über ein gemeinsames Stellelement zur Verschiebung miteinander verbunden sind, über Rasteinrichtungen lösbar fixierbar sind.

Es ist daher Aufgabe der vorliegenden Erfindung, eine Schaltgetriebeanordnung und ein Verfahren zum Betätigen einer Schaltgetriebeanordnung zu schaffen, die ein zuverlässiges Schalten des Schieberades zwischen unterschiedlichen Gängen gewährleisten und die oben beschriebenen Probleme vermeiden.

Diese Aufgabe wird mit einer Schaltgetriebeanordnung mit den Merkmalen des Anspruches 1 sowie einem Verfahren mit den Merkmalen des Anspruches 10 gelöst.

Die erfindungsgemäße Schaltgetriebeanordnung umfasst eine Arretiervorrichtung, die zum Arretieren der mit dem Schieberad verbundenen Schaltstange in zumindest einem der Gänge eingerichtet ist. Durch die Arretiervorrichtung kann somit ein Herauswandern des Schieberades aus dem Zahneingriff unter Belastung verhindert werden. Durch die sichere Arretierung des Schieberades muss zur Arretierung keine Rasteinrichtung mit hohen Rastkräften eingesetzt werden, so dass beim Schalten zwischen den Gängen die Schaltkräfte gering gehalten werden können.

Vorzugsweise weist die Arretiervorrichtung ein Kopplungselement auf, das in einer Eingriffsposition eine axiale Bewegung der Schaltstange blockiert und in einer Freigabeposition eine axiale Bewegung der Schaltstange ermöglicht. Das Kopplungselement kann beispielsweise als bewegbarer Stift ausgebildet sein, der in eine Nut oder Aufnahme an der Schaltstange einfügbar ist. Alternativ kann auch an der Schaltstange ein Vorsprung oder eine Profilierung vorgesehen sein, die in eine Aufnahme an dem Kopplungselement eingreift, um eine Bewegung der Schaltstange zu blockieren.

In einer bevorzugten Ausgestaltung ist die Arretiervorrichtung über eine elektrische Betätigungsvorrichtung schaltbar. Dabei kann die elektrische Betätigungsvorrichtung beispielsweise einen bestrombaren Hubmagneten umfassen, der eine Bewegung des Kopplungselementes der Arretiervorrichtung steuert. Bevorzugt wird die Betätigungsvorrichtung automatisch über die Steuerungseinrichtung abhängig von vorbestimmten Betriebszuständen geschaltet. Beispielsweise kann die Schaltstange blockiert werden, wenn ein vorbestimmter Gang, beispielsweise der mittlere Gang bezogen auf die Position des Schieberades und der Schaltstange eingelegt ist und als Betriebszustand eine Rotationsbewegung an einer vorbestimmten Stelle der Schaltgetriebeanordnung detektiert wird. Eine solche Rotationsbewegung wird erfindungsgemäß an einem Differenzial detektiert werden, das über die Zwischenwelle angetrieben ist, so dass eine Blockierung der Schaltstange nur im Belastungszustand erfolgt, wenn das Differenzial angetrieben ist. Ein solcher Sensor kann beispielsweise als Drehzahlsensor ausgebildet sein, der induktiv erkennt, ob z.B. das Zahnrad des Differenzials, welches trieblich von der Zwischenwelle angetrieben ist, rotiert. Der Sensor kann mit einer Steuerungseinrichtung verbunden sein, die dann die Arretiervorrichtung automatisch schaltet. Optional können auch andere Sensoren eingesetzt oder andere Betriebszustände erfasst und an die Steuerungseinrichtung weitergeleitet werden.

An der Schaltstange ist vorzugsweise neben der Arretiervorrichtung eine Rasteinrichtung vorgesehen, mittels der die Schaltstange in unterschiedlichen Positionen verrastbar ist. Dadurch kann der Nutzer mit geringen Schaltkräften eine Position der Schaltstange einstellen, die dann bei Bedarf und im Belastungsfall durch die Arretiervorrichtung blockiert wird.

Bei dem erfindungsgemäßen Verfahren zum Betätigen einer Schaltgetriebeanordnung wird ein Schieberad axial auf einer Zwischenwelle von einem ersten Gang in einen zweiten Gang verschoben, um ein Drehmoment von einer Antriebswelle von einer Zwischenwelle auf ein Differenzial zu übertragen. An dem Differenzial wird eine Drehbewegung erfasst, um dann eine Arretiervorrichtung zum Arretieren einer mit dem Schieberad verbundenen Schaltstange in dem eingestellten Gang zu arretieren. Dies ermöglicht ein automatisches Blockieren der Schaltstange und vermeidet Fehlschaltungen.

Erfindungsgemäß erfolgt das Betätigen der Arretiervorrichtung automatisch über eine Steuerungseinrichtung, die über einen Sensor eine Drehbewegung am Differenzial erfasst und dann automatisch die Schaltstange in einem vorbestimmten Gang blockiert.

Die Erfindung wird nachfolgend anhand eines Ausführungsbeispiels mit Bezug auf die beigefügten Zeichnungen näher erläutert. Es zeigen:
- Figur 1: eine Ansicht einer erfindungsgemäßen Schaltgetriebeanordnung;
- Figur 2: eine perspektivische Detailansicht der Schaltgetriebeanordnung der Figur 1, und
- Figur 3: eine geschnittene Detailansicht der Schaltgetriebeanordnung im Bereich der Arretiervorrichtung.

Eine Schaltgetriebeanordnung 1 umfasst eine Antriebswelle 2, von der ein Drehmoment über eine Zwischenwelle 3 auf ein Differenzial 4 übertragen werden soll. Auf der Zwischenwelle 3 ist ein Schieberad 5 angeordnet, das eine Innenverzahnung aufweist und in axiale Richtung über eine Schaltstange 7 verschiebbar ist. Hierfür ist die Schaltstange 7 über eine Schaltgabel 6 mit dem Schieberad 5 verbunden.

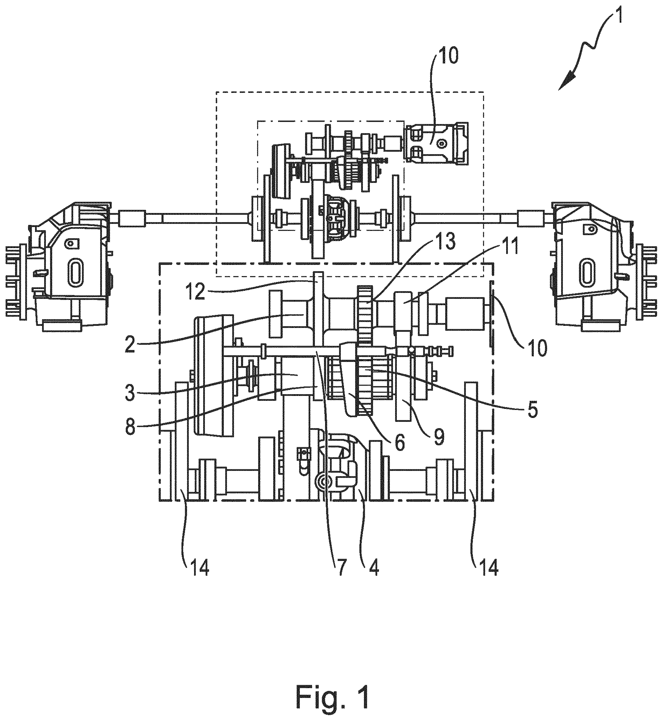

Das Schieberad 5 kann mit einem ersten Losrad 8 auf der linken Seite in Figur 1 über eine Axialverzahnung in Eingriff gebracht werden, um ein Antriebsdrehmoment auf das Differenzial 4 zu übertragen. Durch axiales Verschieben kann das Schieberad 5 in einem mittleren Gang in Eingriff mit einem Zahnrad 13 auf der Antriebswelle 2 stehen, während durch eine weitere Verschiebung des Schieberades 5 nach rechts in Figur 1 das Schieberad 5 über eine Axialverzahnung mit einem Losrad 9 in Eingriff gebracht werden kann. Das Losrad 9 ist dabei in Eingriff mit einem Zahnrad 11 auf der Antriebswelle 2, während das Losrad 8 mit einem Zahnrad 12 auf der Antriebswelle 2 in Eingriff steht. Die Antriebswelle 2 ist über einen Motor 10 angetrieben, der beispielsweise als hydraulischer Motor ausgebildet sein kann. Die Schaltgetriebeanordnung kann abgesehen von einer Arretiervorrichtung dabei so ausgebildet sein, wie dies in der DE 10 2016 124 920 A1 im Detail gezeigt ist.

Das Differenzial 4 ist nur schematisch dargestellt, wobei auf der Achse des Differenzials 4 zwei Betriebsbremsen 14 angeordnet sind.

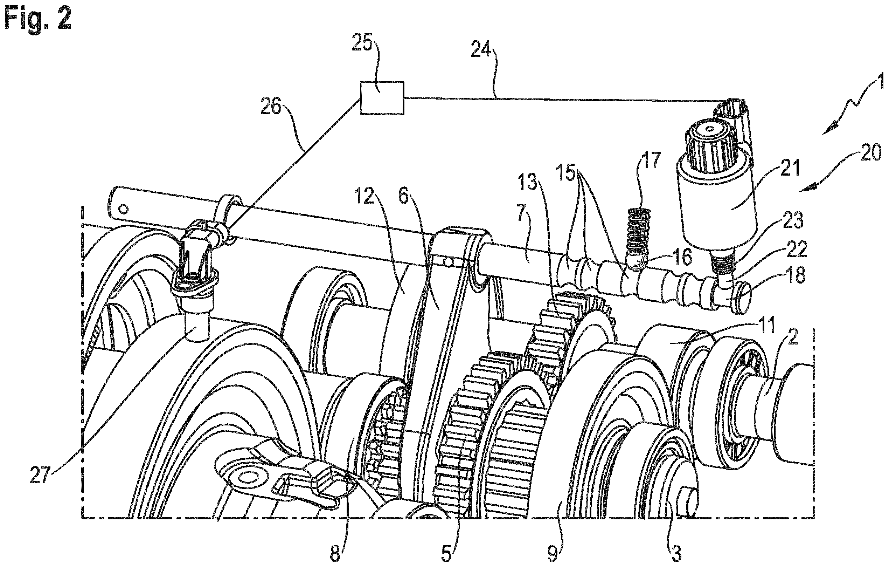

In Figur 2 ist der Bereich der Schaltstange 7 an der Schaltgabel 6 im Detail gezeigt. Die Schaltstange 7 umfasst axial versetzt mehrere Rastaufnahmen 15, in die eine durch eine Feder 17 beaufschlagte Kugel 16 einrastbar ist. Jede nutförmige Rastaufnahme 15 entspricht dabei einer vorbestimmten Position des Schieberades 5, nämlich dem ersten, zweiten oder dritten Gang, sowie Neutralstellungen zwischen den Gängen. Die Anzahl der Gänge kann bei Abwandlung der Schaltgetriebeanordnung 1 auch anders gewählt werden.

An der Schaltstange 7 ist eine Arretiervorrichtung 20 vorgesehen, um eine axiale Bewegung der Schaltstange 7 bei Bedarf blockieren zu können. Hierfür weist die Schaltstange 7 eine nutförmige Aufnahme 18 auf, in die ein Kontaktelement in Form eines bewegbaren Stiftes 22 für eine Blockierung einfügbar ist. Die Arretiervorrichtung 20 ist elektrisch betätigbar und umfasst einen Hubmagneten 21, der bei Bestromung für eine Bewegung des Stiftes 22 sorgt. Der Stift 22 ist durch eine Druckfeder 23 in eine Freigabeposition vorgespannt, so dass bei Unterbrechen der Bestromung der Stift 22 in eine Freigabeposition bewegt wird. Es ist natürlich auch möglich, die Wirkrichtung des Hubmagneten 21 umzudrehen, und nur bei Bestromung den Stift 22 in eine Freigabeposition zu bewegen.

Die Arretiervorrichtung 20 ist über eine Steuerleitung 24 mit einer Steuereinrichtung 25 verbunden, die für eine automatische Schaltung der Arretiervorrichtung 20 sorgt. Die Steuereinrichtung 25 ist über eine Leitung 26 mit einem Sensor 27 verbunden, insbesondere einem induktiven Drehzahlsensor, der erfasst, ob das Differenzial 4 stillsteht oder rotiert. Wenn der drehende Betriebszustand erfasst wird, kann über die Steuereinrichtung 25 die Arretiervorrichtung 20 bei Einstellung eines vorbestimmten Ganges, insbesondere dem mittleren zweiten Gang, optional auch in einem anderen Gang, von der Freigabeposition in die Eingriffsposition geschaltet werden, damit der Stift 22 eine axiale Bewegung der Schaltstange 7 blockiert.

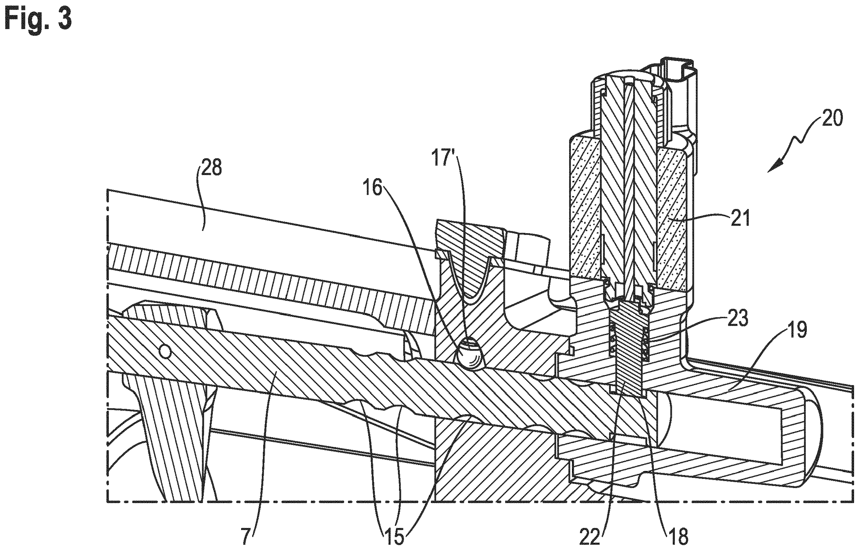

In Figur 3 ist die Arretiervorrichtung 20 in einer Schnittansicht gezeigt. Es ist erkennbar, dass ein Ende der Schaltstange 7 in einem winkelförmigen Gehäuseelement 19 aufgenommen ist, das eine erste Aufnahme für das Ende der Schaltstange 7 und eine weitere mit der ersten Aufnahme verbundene zweite Aufnahme für den Stift 22 aufweist. Die Druckfeder 23 ist an dem Gehäuseelement 19 abgestützt und drückt den Stift 22 in Richtung der Freigabeposition. Der Hubmagnet 21 kann durch Bestromung entgegen der Kraft der Druckfeder 23 den Stift 22 in die Eingriffsposition bewegen. Ein Anker des Hubmagneten 21 ist mit dem Stift 22 verbunden.

Die Schaltstange 7 ist in einem Getriebegehäuse 28 angeordnet, an dem eine Kugel 16 durch eine modifizierte Feder 17', beispielsweise aus einem elastischen Material, in die Verrastungsposition vorgespannt ist, um ein leichtgängiges Verrasten der Kugel 16 an den Rastaufnahmen 15 zu bewirken.

### Bezugszeichenliste

- 1: Schaltgetriebeanordnung
- 2: Antriebswelle
- 3: Zwischenwelle
- 4: Differenzial
- 5: Schieberad
- 6: Schaltgabel
- 7: Schaltstange
- 8: Losrad
- 9: Losrad
- 10: Motor
- 11: Zahnrad
- 12: Zahnrad
- 13: Zahnrad
- 14: Betriebsbremse
- 15: Rastaufnahme
- 16: Kugel
- 17, 17': Feder
- 18: Aufnahme
- 19: Gehäuseelement
- 20: Arretiervorrichtung
- 21: Hubmagnet
- 22: Stift
- 23: Druckfeder
- 24: Steuerleitung
- 25: Steuereinrichtung
- 26: Leitung
- 27: Sensor
- 28: Getriebegehäuse

## Patentansprüche

1. Schaltgetriebeanordnung (1) mit einer Antriebswelle (2) und einer Zwischenwelle (3), auf der ein Schieberad (5) über eine Schaltstange (7) axial verschiebbar ist, um zwischen unterschiedlichen Gängen zu schalten, wobei die Schaltgetriebeanordnung (1) eine Arretiervorrichtung (20) umfasst, die zum Arretieren der Schaltstange (7) in zumindest einem der Gänge eingerichtet ist, wobei die Schaltgetriebeanordnung (1) ein Differenzial (4) umfasst und die Zwischenwelle (3) ein Drehmoment von der Antriebswelle (2) auf das Differenzial (4) überträgt, **dadurch gekennzeichnet, dass** über einen Sensor (27), insbesondere einen Drehzahlsensor, eine Drehbewegung an dem Differenzial (4) erfassbar ist, um die Arretiervorrichtung (20) zu schalten.

2. Schaltgetriebeanordnung nach Anspruch 1, **dadurch gekennzeichnet, dass** die Arretiervorrichtung (20) ein Kopplungselement aufweist, das in einer Eingriffsposition eine axiale Bewegung der Schaltstange (7) blockiert und in einer Freigabeposition eine axiale Bewegung der Schaltstange (7) ermöglicht.

3. Schaltgetriebeanordnung nach Anspruch 1 oder 2, **dadurch gekennzeichnet, dass** die Arretiervorrichtung (20) über eine elektrische Betätigungsvorrichtung schaltbar ist.

4. Schaltgetriebeanordnung nach Anspruch 3, **dadurch gekennzeichnet, dass** die elektrische Betätigungsvorrichtung einen bestrombaren Hubmagneten (21) umfasst.

5. Schaltgetriebeanordnung nach Anspruch 3 oder 4, **dadurch gekennzeichnet, dass** eine Steuerungseinrichtung (25) für die Betätigungsvorrichtung vorgesehen ist.

6. Schaltgetriebeanordnung nach einem der vorhergehenden Ansprüche, **dadurch gekennzeichnet, dass** über eine Rasteinrichtung (15, 16) die Schaltstange (7) in unterschiedlichen Positionen verrastbar ist.

7. Schaltgetriebeanordnung nach einem der vorhergehenden Ansprüche, **dadurch gekennzeichnet, dass** die Arretiervorrichtung (20) einen bewegbaren Stift (22) umfasst, der in eine Aufnahme (18) an der Schaltstange (7) einfügbar ist.

8. Verfahren zum Betätigen einer Schaltgetriebeanordnung (1) mit den folgenden Schritten:
- axiales Verschieben eines Schieberades (5) auf einer Zwischenwelle (3) von einem ersten Gang in einen zweiten Gang, um ein Drehmoment von einer Antriebswelle (2) über die Zwischenwelle (3) auf ein Differenzial (4) zu übertragen; und
- Betätigen einer Arretiervorrichtung (20) zum Arretieren einer mit dem Schieberad (5) verbundenen Schaltstange (7) in dem eingestellten Gang, **dadurch gekennzeichnet, dass**
eine Drehbewegung an dem Differenzial (4) erfasst wird, wobei das Betätigen der Arretiervorrichtung (20) automatisch über eine Steuerungseinrichtung (25) bei Erfassung einer Drehbewegung am Differenzial (4) und einem vorbestimmten Gang erfolgt.

## Claims

1. A gearbox assembly (1) with a drive shaft (2) and an intermediate shaft (3), on which a sliding gear (5) can be axially displaced by means of a selector rod (7) in order to shift between different gears, wherein the gearbox assembly (1) comprises a locking device (20) which is configured to lock the selector rod (7) in at least one of the gears, wherein the gearbox assembly (1) comprises a differential (4) and the intermediate shaft (3) transmits a torque from the drive shaft (2) to the differential (4), **characterized in that** a rotational movement at the differential (4) can be detected by means of a sensor (27), in particular a rotary speed sensor, in order to operate the locking device (20).

2. The gearbox assembly according to claim 1, **characterized in that** the locking device (20) has a clutch element which blocks an axial movement of the selector rod (7) in an engaged position and permits an axial movement of the selector rod (7) in a released position.

3. The gearbox assembly according to claim 1 or claim 2, **characterized in that** the locking device (20) can be operated by means of an electrical actuating device.

4. The gearbox assembly according to claim 3, **characterized in that** the electrical actuating device comprises a solenoid (21) which can be energised.

5. The gearbox assembly according to claim 3 or claim 4, **characterized in that** a control device (25) is provided for the actuating device.

6. The gearbox assembly according to one of the preceding claims, **characterized in that** the selector rod (7) can be ratcheted into different positions via a ratcheting device (15, 16).

7. The gearbox assembly according to one of the preceding claims, **characterized in that** the locking device (20) comprises a movable pin (22) which can be inserted into a recess (18) on the selector rod (7).

8. A method for actuating a gearbox assembly (1), with the following steps:
- axially displacing a sliding gear (5) on an intermediate shaft (3) from a first gear into a second gear in order to transmit a torque from a drive shaft (2) via the intermediate shaft (3) onto a differential (4); and
- actuating a locking device (20) in order to lock a selector rod (7) connected to the sliding gear (5) in the selected gear,
**characterized in that**
a rotational movement is detected at the differential (4), wherein the actuation of the locking device (20) is carried out automatically via a control device (25) in the case of detection of a rotational movement at the differential (4) and for a predetermined gear.

## Revendications

1. Ensemble de boîte de vitesses (1) comprenant un arbre d'entraînement (2) et un arbre intermédiaire (3) sur lequel un pignon coulissant (5) peut être déplacé axialement par l'intermédiaire d'une tringle de changement de vitesse (7), aux fins de passer différentes vitesses, l'ensemble de boîte de vitesses (1) comprenant un dispositif de verrouillage (20) qui est agencé pour le verrouillage de la tringle de changement de vitesse (7) dans au moins une des vitesses, l'ensemble de boîte de vitesses (1) comprenant un différentiel (4), et l'arbre intermédiaire (3) transmettant un couple depuis l'arbre d'entraînement (2) au différentiel (4), **caractérisé en ce qu'**un capteur (27), en particulier un capteur de régime, permet de détecter un mouvement de rotation sur le différentiel (4), en vue de commander le dispositif de verrouillage (20).

2. Ensemble de boîte de vitesses selon la revendication 1, **caractérisé en ce que** le dispositif de verrouillage (20) présente un élément d'accouplement qui, dans une position de prise, bloque un mouvement axial de la tringle de changement de vitesse (7), et, dans une position de libération, autorise un mouvement axial de la tringle de changement de vitesse (7).

3. Ensemble de boîte de vitesses selon la revendication 1 ou 2, **caractérisé en ce que** le dispositif de verrouillage (20) peut être commandé par l'intermédiaire d'un dispositif d'actionnement électrique.

4. Ensemble de boîte de vitesses selon la revendication 3, **caractérisé en ce que** le dispositif d'actionnement électrique comprend un aimant de levage (21) pouvant être alimenté en courant.

5. Ensemble de boîte de vitesses selon la revendication 3 ou 4, **caractérisé en ce qu'**il est prévu un dispositif de commande (25) pour le dispositif d'actionnement.

6. Ensemble de boîte de vitesses selon l'une des revendications précédentes, **caractérisé en ce que** la tringle de changement de vitesse (7) peut être encliquetée dans différentes positions par l'intermédiaire d'un dispositif d'encliquetage (15, 16).

7. Ensemble de boîte de vitesses selon l'une des revendications précédentes, **caractérisé en ce que** le dispositif de verrouillage (20) comporte une tige (22) mobile qui peut être insérée dans un logement (18) situé sur la tringle de changement de vitesse (7).

8. Procédé d'actionnement d'un ensemble de boîte de vitesses (1), comprenant les étapes suivantes :
- déplacement axial d'un pignon coulissant (5) sur un arbre intermédiaire (3), d'une première vitesse à une deuxième vitesse, aux fins de transmettre un couple de l'arbre d'entraînement (2) à un différentiel (4), via l'arbre intermédiaire (3) ; et
- actionnement du dispositif de verrouillage (20) aux fins de verrouiller dans la vitesse réglée une tringle de changement de vitesse (7) reliée au pignon coulissant (5),
**caractérisé en ce que**
un mouvement de rotation est détecté sur le différentiel (4), l'actionnement du dispositif de verrouillage (20) se faisant automatiquement par l'intermédiaire d'un dispositif de commande (25) en cas de détection d'un mouvement de rotation sur le différentiel (4) et d'une vitesse prédéfinie.
